# EUROPEAN PATENT APPLICATION

(11) **EP 4 566 935 A1**
(43) Date of publication of application: **11.06.2025**
(21) Application number: 23213171.4
(22) Date of filing: 29.11.2023
(51) Int. Cl.: B63G 8/00, G01S 7/00, G01S 15/00, G01V 3/00, G01V 3/08, G01V 3/15

(54) **METHOD AND SYSTEM FOR CONDUCTING GEOPHYSICAL, PHYSICOCHEMICAL, IMAGING, AND PROFILING MEASUREMENTS BY AN AUTONOMOUS UNDERWATER VEHICLE FORMATION USING SUPERPOSITION DETERMINATION ALGORITHMS**

(71) Applicant: SR Robotics Sp. z.o.o., 40-389 Katowice slaskie (PL)
(72) Inventor: Borowik, Lukasz, 40-645 Katowice (PL); Borowik, Ryszard, 40-555 Katowice (PL); Sciegienka, PIotr, 41-940 Piekary Slaskie (PL); Borowik, Tomasz, 43-190 Mikolow (PL); Hartwig, Tomasz, 41-404 Myslowice (PL)
(74) Representative: Zielinski, Wojciech Leszek

(57) **Abstract**

Method and system for performing geophysical, physicochemical measurements, imaging and profiling with the formation of autonomous underwater vehicles using algorithms for determining superposition, characterized by hydrolocation buoys and underwater vehicles perform mutual self-calibration of the geographical direction and speed of sound propagation in the near-surface layer of the reservoir where measurements will be carried out. In order to determine the underwater superposition of AUVs, system components in the form of locating buoys communicate according to a defined interrogation cycle with specific slot lengths depending on the dimensions of the examined water area.

## Description

The subject of the invention is a **method and system for conducting geophysical, physicochemical, imaging and profiling measurements with the use of autonomous underwater vehicle formation using superposition determination algorithms** in order to increase the quality and efficiency of the measurements. Underwater measurements, such as geophysical surveys using multi-beam sonars, side-scan sonars, magnetometers, measurements of physicochemical properties of water reservoirs, bottom contour imaging and searching for objects lying on the bottom or buried under its surface, pose a challenge mainly in terms of determining the exact position of the measurement as well as improving its cost efficiency. The aquatic environment poses a challenge in determining the exact position of objects under water, both searched objects such as UXO and underwater ROV and AUV vehicles due to the lack of a GPS signal under the water surface, variable speed of propagation of acoustic waves in water, refraction of acoustic waves, occurrence "shadow zones", reflections of acoustic waves in the vicinity of hydrotechnical infrastructure and in shallow waters, lack of fast underwater communication, interference of devices with each other. Another challenge in the area of performing geophysical and physicochemical measurements, imaging and profiling of water bodies are changing weather conditions and high costs of purchasing, renting and mobilizing units and sensors used for research, which is why cost effectiveness by increasing the speed of research is very important. In order to obtain the required quality of measurement data, it is necessary to conduct sensor measurements well below the water level using towed systems as well as underwater vehicles. In order to obtain the required resolution of measurement maps, the limitation is the frequency of the measuring device, a significant part of the measurements are performed by hydroacoustic measurements and the measurement beam must travel from the sensor to the object or bottom and return, which determines the measurement speed. The only way to increase the efficiency of measurements is to increase the width of the measurement lane. The invention in the form of a method and system for performing geophysical, physicochemical, imaging and profiling measurements using formations of autonomous underwater vehicles using algorithms for determining superposition will allow to determine such trajectories of each AUV within the formation to achieve the designated mission goal and to maximize the width of the measurement LANE, which will directly improve the cost effectiveness of conducted research. Geophysical and physicochemical measurements, bottom imaging and profiling are an essential element of the investment process as part of offshore projects, port expansion, dredging of rivers and reservoirs, exploration, environmental monitoring, and monitoring of critical infrastructure.

The most common methods for determining the position of underwater vehicles using acoustic waves for location include the Ultra Short Base Line (USBL) or Super Short Base Line (SSBL). The localization system includes, in the surface part: a compass, a tilt sensor, at least one GPS receiver and a hydrolocation head mounted under the water surface called a Transceiver, and an underwater acoustic module called a Transponder or Beacon mounted on an ROV or AUV underwater vehicle. The transceiver head consists of a system of min. 3 hydrophones at a baseline distance typically 10 cm. The position of the underwater vehicle is determined by calculating the distance and angle at which the acoustic wave reaches from the Transponder installed on the underwater vehicle to the Transceiver installed on the surface unit. The distance between the Transceiver and the Transponder is calculated according to the speed of sound propagation in a given water medium and the time required for the sound wave to travel from the Transceiver to the Transponder. The acoustic cycle is as follows, the signal is transmitted from the Transceiver to the Transponder and then the Transponder responds with another acoustic signal to the Transceiver. The USBL location system is very popular due to its lower costs compared to alternative solutions and procedurally easier calibration, but it has a number of disadvantages: (1) the occurrence of angular error and the increase in the angular position error with increasing the distance between the Transceiver and the Transponder, the so-called slant range; (2) the system requires time-consuming calibration of the direction (Heading) and distance calculated based on the speed of sound (Range); (3) is susceptible to warhead roll errors due to the rigid mechanical connection to the surface vessel; (4) high sensitivity to disturbances related to reflected waves, interference and the occurrence of sound wave refraction, which result in the so-called shadow zones.

In order to minimize the position error of the underwater vehicle, time-consuming direction and distance calibration is performed by stabilizing the Transponder underwater and swimming around it with the Transceiver to collect the point cloud and making course and distance corrections. In order to minimize the position error resulting from the tilt of the head rigidly connected to the surface platform, an IMU (Inertial Motion Unit) tilt sensor is used.

There is a solution of the so-called inverted USBL and the vehicle starts the acoustic cycle, the vehicle can support its position with the INS inertial navigation system.

The Long Base Line LBL solution is known. To determine the location of the underwater vehicle on which the transponder is mounted, hydrolocation buoys are used, which measure the distance of the underwater vehicle to a minimum of three hydrolocation buoys. Determining the underwater position is often supplemented with data from the depth sensor of the underwater vehicle. The position of the underwater vehicle is determined by the following acoustic cycle: (1) the transponder on the vehicle sends an acoustic signal which is received by the long baseline transponders; (2) the transponders respond and the acoustic feedback is received by the vehicle's transponder; (3) measuring the time needed for the acoustic signal to cover the distance between the vehicle and the LBL hydrolocation buoys allows the position of the transponder on the vehicle to be calculated using triangulation or position search algorithms. The geometry of the hydrolocation buoy system and the calculated position of the underwater vehicle can be transformed into a coordinate system with geographical references. The hydrolocation system based on a long baseline is used when accurate determination of the underwater position of underwater vehicles is required. The disadvantages of the long LBL baseline system include: (1) the time-consuming process of setting up the buoys at the bottom of the reservoir and retrieving them after the measurements are completed; (2) the time-consuming process of determining the geolocation coordinates of individual buoys, which, similarly to USBL calibration, requires collecting a cloud of points in order to average the position by swimming around the submerged buoys; (4) high system costs; (5) a minimum number of 3 hydrolocation buoys to determine the position of the transponder installed on the underwater vehicle.

There are long baseline systems installed on hydrolocation buoys floating on the water surface. The disadvantage of both LBL systems is the inability to determine the position if distance measurements to at least three location buoys are not available.

The essence of the invention:
The system for performing geophysical, physicochemical measurements, imaging and profiling with the formation of autonomous underwater vehicles using the algorithms for determining superposition according to the invention solves the shortcomings of the above solutions in an unprecedented and non-obvious way.

The system for performing geophysical, physicochemical measurements, imaging and profiling with the formation of autonomous underwater vehicles using the algorithms for determining superposition according to the invention is characterized by the following features:
a) The system consists of a minimum of two hydrolocation buoys and a formation of autonomous AUVs. Each hydrolocation buoy is equipped with a USBL transceiver, a GPS receiver, a direction and tilt measurement sensor, preferably a satellite compass, and an inertial measurement unit (IMU). Autonomous underwater vehicles are equipped with the following navigation elements: (a) USBL transponder with the function of attaching a text message to the acoustic signal, (b) INS inertial navigation system, preferably equipped with an optical gyroscope Fiber Optic Gyroscope FOG, Doppler Velocity sensor for measuring underwater speed Log DVL, sensor for measuring roll, pitch, yaw angles RPY, (c) depth sensor. Each of the two location buoys and each of the underwater autonomous vehicles is equipped with a disciplined atomic clock.
b) After launching hydrolocation buoys, in the area where measurements will be performed, the buoys perform self-calibration in terms of their direction (Heading) and the speed of sound in the water at the depth at which the USBL transceivers are immersed. Calibration is required due to a misalignment error in the assembly of the component devices: satellite compass, IMU and USBL Transceiver head. Calibration of the USBL 1 measuring buoy took place as follows, the USBL 1 buoy receives, through its own GPS receiver, the geographical coordinates in which it is located and, through the communication channel with the USBL 2 hydrolocation buoy, information about the geographical coordinates of the USBL 2 buoy, at the same time the USBL 1 buoy Transceiver receives a hydroacoustic signal from the USBL 2 buoy Transceiver The USBL 1 hydrolocation buoy sees 2 measurement points GPS 2 and USBL 2 shifted by a specific angle and differing in distance from the USBL 1 buoy. The determined angle between these lines allows you to correct the measurement direction of the USBL 1 Transceiver and the speed of sound so that the lengths of the sections determined between the GPS receivers and USBL transceivers were equal. According to the same scheme and at the same time, the USBL 2 hydrolocation buoy self-calibrates.
c) In order to determine the underwater superposition of autonomous underwater AUVs, defined as the absolute position determined in the process of triangulation in relation to USBL hydrolocation buoys, an interrogation cycle of transmitting acoustic messages by vehicles and hydrolocation buoys is established. The length of the time slot during which a vehicle or buoy transmits depends on the dimensions of the measurement area in which geophysical, physicochemical research, imaging and profiling are performed using autonomous vehicle formations. The duration of a single time slot should enable sending and receiving an acoustic signal between the most distant elements of the underwater part of the system, i.e. USBL transceivers and transponders. Each hydrolocation buoy and each underwater autonomous vehicle AUV is equipped with an atomic clock. The interrogation cycle consists in each member of the hydrolocation system transmitting in its interrogation slot. The transmitted message is always addressed to a specific recipient and received by other system members.
d) In order to maintain formation and avoid collisions, the hydroacoustic signal sent from the hydrolocation buoy is accompanied by information about the exact position of the buoy and addressed information about the superposition of the vehicle. Each acoustic signal sent by the vehicle is accompanied by information about the vehicle's status and its current position according to the on-board navigation system. This information is received by other system members and taken into account in their navigation systems.
e) Each element of the system knows its position developed in its own on-board navigation system and the position of other system members, and at the same time is able to measure its distance to them. Information about the measured distances allows you to correct your own position. Thanks to atomic clocks, superpositions are calculated by measuring the exact distances between vehicles and buoys in the acoustic channel and knowing the exact locations of the USBL transceivers according to GPS.
f) The system can operate in conditions of periodically lost communication with location buoys in difficult water areas such as coastal waters, port areas, rivers and canals, shallow water areas, areas with "shadow zones". Due to the fact that two USBL hydrolocation buoys are used to determine the position of underwater vehicles, in case of problems with communication with one of the buoys, which is often encountered in the above-mentioned areas, it is possible to determine the position using the second USBL hydrolocation buoy, with which the vehicles have hydroacoustic communication , additionally, based on the information received about the calculated positions in the on-board navigation systems of individual autonomous underwater vehicles AUV, the exact location of the formation participants is developed through multilateration.
g) Geophysical, physicochemical measurements, imaging and profiling carried out by a formation of autonomous underwater vehicles AUV, which, depending on the mission performed, adopt an optimal flow trajectory and control the mutual position in relation to the other members of the formation. The flow trajectories of underwater autonomous vehicles are calculated in such a way as to cover the widest possible measurement range while maintaining the defined measurement accuracy requirements.
h) Requirements are specified by defining minimum measurement parameters, e.g. in the case of a port channel deepening project, the parameters are: target depth of the channel, minimum magnetic field intensity for the searched, potentially dangerous UXO objects, maximum distance of the AUV vehicle trajectory above the bottom. The aim of the project is to identify all objects whose magnetic field intensity is higher than the parameter set in the requirements, usually expressed in nT. The intensity of the magnetic field corresponds to an object with a specific volume that may contain explosive material. These are dangerous remnants of armed conflicts, known as UXO, which pose a significant threat during dredging works.
i) AUVs in optimal formation, based on on-board depth sensors, sensors measuring the distance to the bottom and magnetometers calculate the mutual position in such a way that the distance of the vehicle to the bottom is set, the minimum level of the magnetic field of the searched object is given, the depth of the AUV vehicles is measured from the on-board depth sensor, the maximum is calculated from the horizontal gradient distance between vehicles so that the formation of AUVs can detect objects with minimum magnetic field intensity located at a defined distance from the water surface. If there are significant changes in the bottom shape in the measurement area, it is advisable to introduce an additional parameter, the so-called Overlapping as a function of changes in the depth of AUVs in the study area.

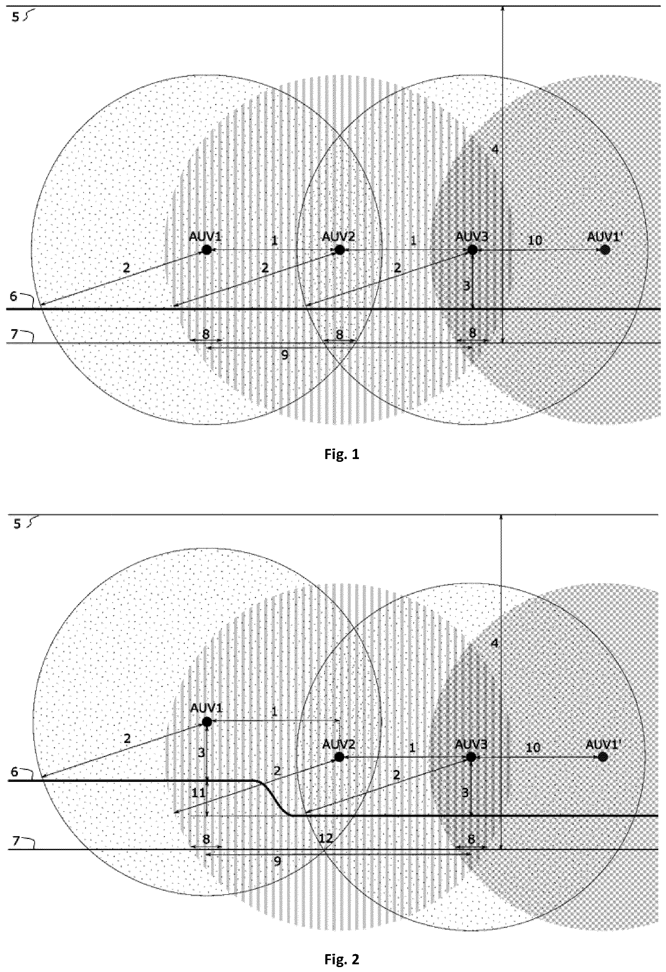

The subject of the invention is presented in an example embodiment in the attached drawings Fig.1-4.

Fig. 1 shows the formation of underwater autonomous vehicles AUV1, AUV2, AUV3 while performing magnetometric measurements, where the input measurement parameters are: target channel depth (4), minimum magnetic field intensity for the searched, potentially dangerous UXO objects, which as a result of the transformation of the formula on the amplitude of the magnetic anomaly allows you to calculate the maximum range of the magnetometer (2) allowing you to detect an object with a known magnetic field strength (formulas for calculating the magnetic anomaly for different latitudes: T=M/(r^3) for a latitude below 60 degrees or T=2M /(r^3) for a latitude greater than 60 degrees, where T - magnetic field intensity, M-magnetic moment, r-distance of the magnetometer to the object), the maximum distance of the AUV vehicle to the bottom during geophysical measurements (3). Moreover, in Fig. 1 the following are marked: the water line (5), the bottom line (6), the target depth of the reservoir to which objects with a defined minimum magnetic field intensity are searched (7), usually this is the target depth to which the reservoir is to be deepened.

Determining the input parameters: target depth (4), measurement range of magnetometers installed on AUVs (2) and the distance to the bottom at which the AUV is to swim (3) allows for the calculation of the optimal trajectory for each AUV in such a way that through circles with radius (2), a part common to at least 2 vehicles is determined. When searching for ferromagnetic objects, the exact position of the sought object can be determined using a horizontal gradient. Knowing the magnetic field strength of the sought object recorded by each magnetometer, an intersection point is determined for the condition when both magnetometers have the same magnetic field strength value as a function of the distance of the object to the magnetometer.

Fig. 1 shows the formation system of AUVs in the case of a flat bottom of a reservoir, then the measurement belt, in the area of which it is possible to determine the mass and the exact position of the identified ferromagnetic object, corresponds to the part common to all three AUVs (9). In Fig. 1, the coverage margin (8) referred to as Overlapping in geophysical studies is taken into account. The measurement method according to the invention allows to calculate the maximum horizontal distance between underwater autonomous vehicles (1) and, taking into account the condition that the vehicles cannot exceed the specified measurement speed, to obtain the most cost-effective formation of AUVs.

The distance (10) at which the formation should perform the next measurement strip is marked in Fig. 1. Section (10) is the distance between the path of the outermost vehicle in the formation (according to the AUV3 example) and the path of the outermost vehicle AUV1' during the next measurement strip.

Fig. 2 shows a case when the depth in the measurement area varies during measurements. The difference between the depths of the reservoir (11) requires that the formation, when performing magnetometric measurements, changes its layout in such a way that the AUV1 vehicle maintains the set distance to the bottom (3), new circles with maximum range and parts common to all sensors on AUV 1 vehicles are designated to AUV 3. In the presented formation, the distance (1) between AUV 1 and AUV 2 is the maximum distance with the depth difference (11), in this case, the coverage margin (8) in Fig. 1 takes the value zero and corresponds to the intersection of circles with radius (2) plotted from the position of vehicle AUV1 and vehicle AUV 2 and is located in Fig. 2 at point (12).

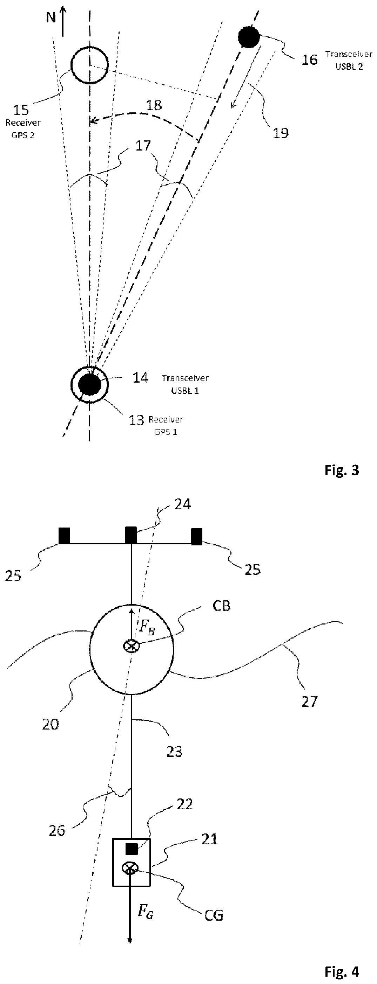

The subject of the invention in the form of self-calibration of hydrolocation buoys is shown in Fig. 3. The USBL1 hydrolocation buoy consisting of the GPS Receiver 1 (13) and the underwater Transceiver USBL 1 (14) determines the direction in which the hydrolocation buoy 2 (15) is located based on geographical coordinates GPS 1 and GPS 2 receivers. Hydrolocation buoys 1 and 2 have a wireless communication link. Then the USBL 1 Transceiver (14) measures the distance and direction according to the USBL 2 Transceiver (16). Due to the angular error of the measurements of the USBL heads (17), it is necessary to perform several measurements of the angle of arrival of the signal from the Transceiver (16) in order to determine the correct angular error (18). The second parameter subject to calibration is the speed of sound propagation in water, which is corrected after taking into account the known difference in distance (19) between the GPS receivers of buoys 1 and 2 and the distance calculated between Transceivers 1 and 2. In a similar way, the USBL 2 hydrolocation buoy self-calibrates according to the Receiver. GPS 1 and USBL 1 Transceiver.

Fig. 4 shows the construction of a hydro location buoy. The hydro location buoy consists of a USBL transceiver (21) with an internal IMU inertial sensor (22), a buoyancy part that keeps the buoy on the surface (20), a controller with a GPS receiver, a wireless communication module, an atomic clock (24), and a satellite compass (25).. The hydro location buoy has positive buoyancy and stays on the water surface (27). Due to the rigid connection of the buoyancy part (20) with the USBL transceiver (21) and the distance between the center of buoyancy CB and the center of gravity CG, the buoy has a righting moment ensuring a stable vertical position of the buoy.

## Claims

1. hydrolocation buoys and underwater vehicles perform mutual self-calibration of the geographical direction and speed of sound propagation in the near-surface layer of the reservoir where measurements will be carried out

2. in order to determine the underwater superposition of AUVs, system components in the form of locating buoys communicate according to a defined interrogation cycle with specific slot lengths depending on the dimensions of the examined water area

3. together with the acoustic signal sent to the underwater vehicle via the USBL(k) location buoys, for example USBL 1 and USBL 2, information about the vehicle superposition achieved during the previous interrogation cycle is included. AUV(1), AUV(2) to AUV(n) vehicles successively receive information about their superpositions in their time slots and use them to correct their current position in the on-board navigation system.

4. the message sent from the locating buoy to the AUV along with its superposition is received by all AUVs and other buoys, and each vehicle takes into account in its on-board navigation system the corrected confident position (superposition) of this AUV in order to maintain formation and avoid collisions.

5. the acoustic signal sent by the AUV defined as part of the interrogation cycle is accompanied by information about the position obtained by the on-board inertial navigation. The position message is received by other vehicles and hydrolocation buoys, and disciplined atomic clocks on AUVs and buoys allow for calculating the distance to the AUV transmitting in a given communication slot.

6. due to the use of hydrolocation buoys with USBL heads and a swarm of autonomous underwater vehicles with disciplined atomic clocks and transmitting according to a defined interrogation cycle, the system can operate in conditions of periodically lost communication with hydrolocation buoys, because the absolute position error can be calculated during measurements.

7. vehicles assume formation depending on the mission being performed and control the relative position of other members of the formation, e.g. in the case of searching for dangerous objects.

8. AUVs adopt a formation to cover as wide a measurement swath as possible while maintaining defined measurement accuracy requirements.

9. AUVs in such a formation, based on on-board depth sensors, sensors measuring the distance to the bottom and magnetometers, calculate the mutual optimal position in such a way that the distance of the vehicle to the bottom is set and the minimum level of the magnetic field of the searched object is provided from the on-board sensor the depth of the AUVs is measured, the maximum distance between the vehicles is calculated from the horizontal gradient, so that the formation of AUVs can detect objects with a minimum magnetic field intensity located at a defined distance from the water surface.
